Europäisches Patentamt

**European Patent Office**

**Office européen des brevets**

(19)

(11) Veröffentlichungsnummer: **0 134 894 B1**

# (12) EUROPÄISCHE PATENTSCHRIFT

(45) Veröffentlichungstag der Patentschrift:
**14.09.88**

(21) Anmeldenummer: **84105319.2**

(22) Anmeldetag: **10.05.84**

(51) Int. Cl.⁴: **B 01 J 3/04,** C 10 G 1/06

(54) **Verfahren zur prozesstechnischen Einbindung von thermisch- und druckbelasteten Mehrphasen-Reaktoren speziell von Hydrierreaktoren in der Sumpfphase.**

(30) Priorität: **02.07.83 DE 3323885**

(43) Veröffentlichungstag der Anmeldung:
**27.03.85 Patentblatt 85/13**

(45) Bekanntmachung des Hinweises auf die Patenterteilung:
**14.09.88 Patentblatt 88/37**

(84) Benannte Vertragsstaaten:
**BE DE FR GB NL**

(56) Entgegenhaltungen:
**EP - A - 0 079 092**
**DD - A - 54 994**
**DE - A - 1 542 005**
**DE - C - 490 558**

(73) Patentinhaber: **RUHRKOHLE AKTIENGESELLSCHAFT, Rellinghauser Strasse 1 Postfach 10 32 62, D-4300 Essen 1 (DE)**

(72) Erfinder: **Wolowski, Eckard, Dr.-Ing., Kettwiger Strasse 11, D-4330 Mülheim (DE)**
Erfinder: **Mirtsch, Frank, Dr.-Ing., Prosper Strasse 101, D-4250 Bottrop (DE)**

**Beschreibung**

Die Erfindung betrifft ein Verfahren zur prozesstechnischen Einbindung von thermisch- und druckbelasteten Sumpfphasereaktoren, wobei in der Sumpfphase eine Gasphase, flüssige Kohlenwasserstoffe und Feststoffe anfallen und wobei ein Heissabscheider nachgestaltet ist, insbesondere von Kohlehydrierreaktoren mit innenliegender, den Reaktionsraum bildender Blase, mit äusserem Druckmantel und einem Druckmedium zwischen Blase und Druckmantel, wobei aus dem Reaktionsprodukt abgetrennte Gase nach Verdichtung zurückgeführt werden und wobei über eine Pendelleitung eine Verbindung der Reaktionsphase zum Ringraum des Reaktors gegeben ist, dadurch gekennzeichnet, dass die Pendelleitung 12 zum Ringraum des Reaktors 5 und des Heissabscheiders 6 nach Abtrennung von Feststoffen und schwerer siedenden Ölen zwischen der Kopfseite des Heissabscheiders und der Saugseite des Verdichters an den Gas/Dämpfe-Pfad angeschlossen ist.

Die konventionellen Reaktoren der Kohlenhydrierung besitzen eine keramische Ausmauerung, um den äusseren drucktragenden Mantel auf niedriger Temperatur zu halten. Nachteilig ist hierbei, dass die poröse Ausmauerung im Fall einer schnellen Druckentlastung der Reaktoren zerstört werden kann.

Bei chemischen Reaktionen, welche bei erhöhten Drücken und erhöhten Temperaturen ablaufen, hat sich das Reaktorprinzip der schwimmenden Blase bewährt. Um der hohen Temperatur und dem chemischen Angriff widerstehen zu können, besteht hierbei der Reaktorinnenmantel aus temperatur- und korrosionsbeständigem Werkstoff. Der Prozessdruck wird auf den äusseren Reaktormantel übertragen, welcher sich auf niedrigem Temperaturniveau befindet. Dies erfolgt durch ein Gas- oder flüssiges Stützmedium, welches sich zwischen beiden Reaktormänteln (Ringraum) befindet, den Innendruck auf den äusseren drucktragenden übeträgt und gleichzeitig ein Temperaturgefälle zwischen dem inneren und äusseren Reaktormantel erzeugt. Auf diese Weise können – verglichen mit einem Vollwandreaktor – der Innen- und der Aussenmantel des Reaktors vergleichsweise dünn und somit kostensparend gefertigt werden. Wichtige Voraussetzung für den Einsatz derartiger Reaktoren ist ein ständig gesicherter Druckausgleich zwischen dem Innenraum und dem Stützmedium im Ringraum. Dieser Druckausgleich muss auch für instationäre Prozessbedingungen (z.B. An-Abfahren, Lastwechsel) sowie für Notsituationen (z.B. schnelle Druckentlastung beim thermischen Durchgehen des Reaktors) gewährleistet sein. Bilden die Reaktionspartner im Reaktor ein Mehrphasengemisch, welches den Ringraum verstopfen kann (z.B. Verkoken im Fall der Kohle- oder Schwerölhydrierung), ist darauf zu achten, dass das Reaktionsgemisch nicht in den Ringraum gelangt.

Es ist bekannt, zur Druckübertragung ein flüssiges Stützmittel, welches nicht der chemischen Zusammensetzung der Reaktionspartner entspricht und mittels eines Gaspolsters (in Ausgleichsleitung und -behälter) von den Reaktionspartnern getrennt wird, zu verwenden (DE-C-490 558). Um auch bei raschen Druckabsenkungen am Reaktoraustritt einen schnellen Druckausgleich zwischen dem inneren und äusseren Reaktormantel sicherzustellen, ist weiterhin eine zusätzliche Verbindungsleitung mit Rückschlagventil zwischen dem flüssigen Stützmedium und dem Reaktoraustritt bekannt (DE-C-1 542 005). Für den Fall, dass die Reaktionspartner aus einem Ein- oder Zweiphasensystem (gas/flüssig) bestehen, ist weiterhin bekannt, einen Teil des gasförmigen Reaktionspartners als Stützmedium zu verwenden. Hierbei wird an der Druckseite des Gasumlaufverdichters eine Menge Kaltgas als Teilstrom aus dem Gaskreislauf entnommen und über ein Regelorgan in den Ringraum des Reaktors geleitet. Beim Durchströmen des Ringraumes erhitzt sich dieser gasförmige Teilstrom auf nahezu Reaktionstemperatur und sorgt gleichzeitig für den erforderlichen Druckausgleich (DD-A-54 994). Es entfallen hierbei die technischen Vorkehrungen zum Abdichten, welche zwecks Ausgleich der Wärmedehnung zwischen Innen- und Aussenmantel bei einem separaten Stützmedium erforderlich wären. Das letztgenannte Verfahren ist im Hinblick auf Hochdruckreaktoren mit einem Gemisch aus gasförmigen, flüssigen und festen Reaktionspartnern nicht anwendbar, da hierbei zwischen Ringraum und Innenraum eine direkte Verbindung besteht, durch welche zeitweise feststoffhaltige Reaktionsprodukte in den Ringraum gelangen und letzteren teilweise oder vollständig verstopfen können (Verkokung bei Hydrierungen in der Sumpfphase). Eine gleichmässige Kühlung des äusseren, drucktragenden Reaktormantels wäre dann nicht mehr gewährleistet. Weiterhin ist zu berücksichtigen, dass der aus dem Gaskreislauf abgezogene Teilstrom über ein Regelorgan dem Ringraum des Reaktors zugeführt werden muss. Dieses Regelorgan kann eine Störquelle für den gesamten Prozess darstellen.

Auch die beiden erstgenannten Verfahren sind nicht ohne weiteres auf einen kontinuierlich durchströmten Mehrphase-Reaktor, dessen Reaktionspartner beispielsweise bei längerer Verweilzeit zur Verkokung neigen, anwendbar, da hierfür eine gasführende Druckausgleichsleitung vom Reaktionsraum zum Stützmedium im Ringraum benötigt würde. Letztere kann jedoch verstopfen, wenn nicht mittels geregelter Gasspülung (aufwendig und störanfällig) diese Druckausgleichsleitung ständig gespült wird.

Der Erfindung liegt die Aufgabe zugrunde, thermisch- und druckbelastete Mehrphase-Reaktoren nach dem Prinzip der schwimmenden Blase – beispielsweise in einem Sumpfphasehydrierungsprozess – zu realisieren, wobei eine Verstopfung des Ringraumes sowie aufwendige und störanfällige Hilfseinrichtungen vermieden werden.

Diese Aufgabe wird erfindungsgemäss dadurch gelöst, dass die Pendelleitung zum Ringraum des Reaktors und des Heissabscheiders nach Abtrennen von Feststoffen und schwerer siedenden Ölen zwischen der Kopfseite des Heissabscheiders und der Saugseite des Verdichters an den Gas/Dämpfe-Pfad angeschlossen ist.

Da der Druckverlust zwischen den Reaktoren und den Abscheidern im allgemeinen vergleichsweise gering ist, wird sichergestellt, dass nicht nur im stationären Betrieb, sondern auch bei Lastwechsel und Störfällen (z.B. rascher Druckabfall im Reaktorsystem) ein unmittelbarer Druckausgleich zwischen dem Reaktionsraum und dem Ringraum stattfindet. Zusätzliche Hilfs- und Regelungseinrichtungen sind nicht erforderlich.

Die Verwendung einer solchen Pendelleitung zwischen Reaktions- und Ringraum lässt sich besonders vorteilhaft am Beispiel des Hochdruckkreislaufes einer Sumpfphasehydrierung realisieren, da hierbei ein Teil der erforderlichen apparativen Einrichtungen bereits vorhanden ist. In der Zeichnung sind verschiedene Verfahrensweisen schematisch dargestellt. Es zeigen:

Figur 1–4

Fliessschemata einer Kohleölanlage mit mehreren in Reihe geschalteten Abscheidern und einem Verdichter, wobei der Reaktor- bzw. Heissabscheiderringraum mit einzelnen Abscheidern oder der Saugleitung des Verdichters verbunden ist.

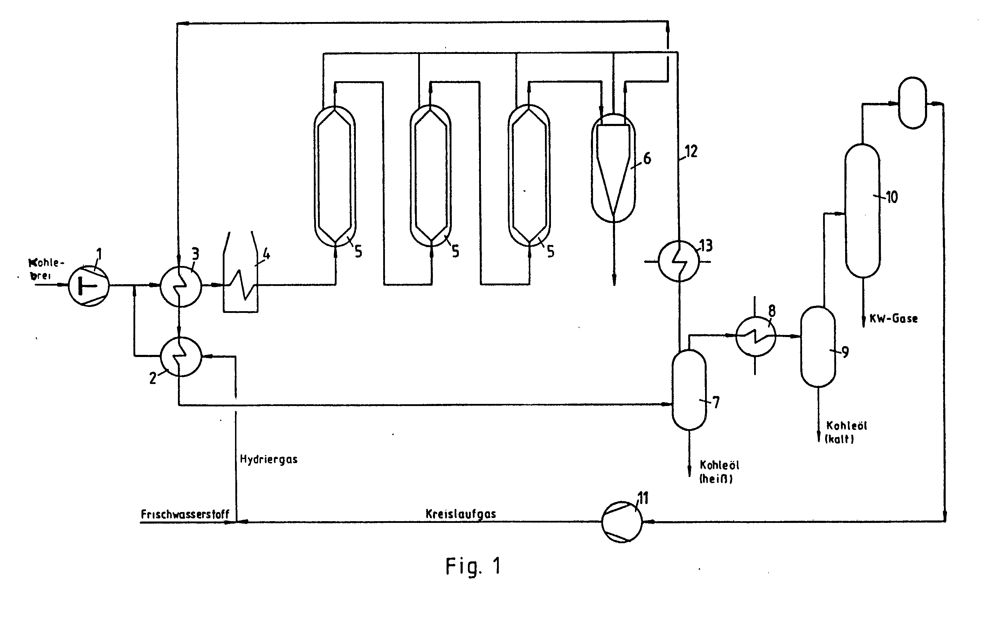

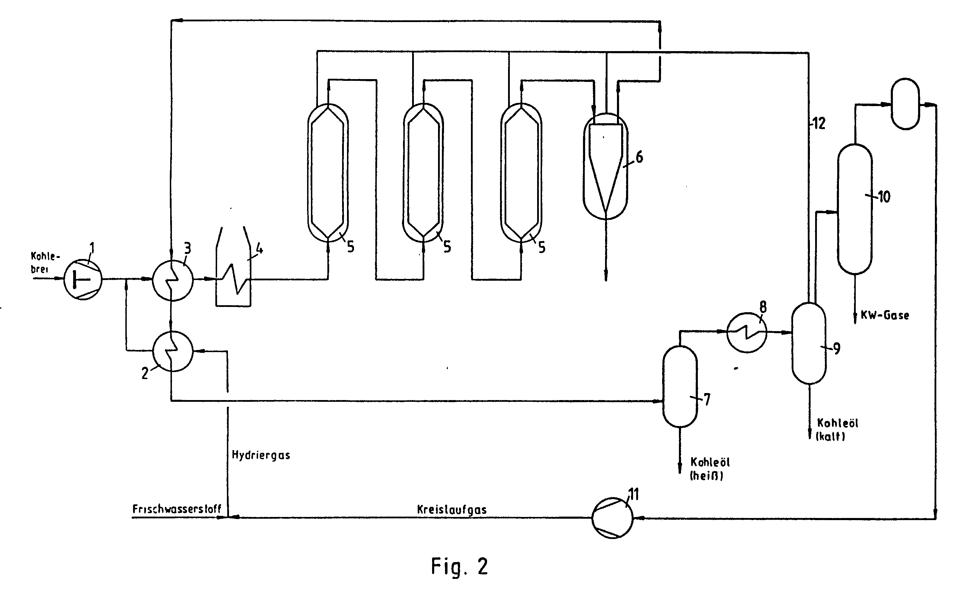

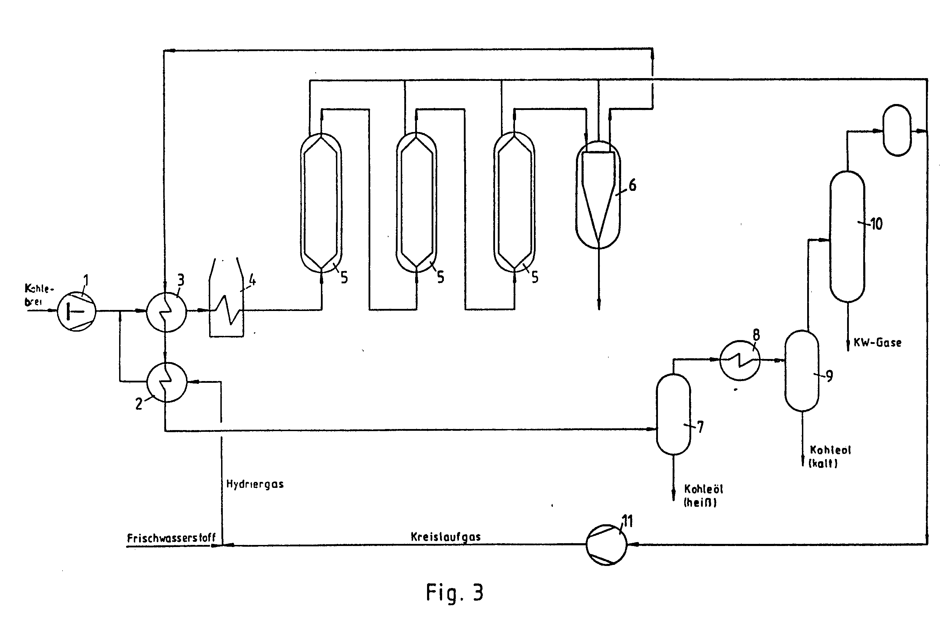

Figur 1 stellt eine Verfahrensweise zur erfindungsgemässen prozesstechnischen Einbindung von Hochdruckreaktoren (Prinzip schwimmende Blase) dar. Der mit prozesseigenem Öl angerührte Kohlebrei wird mittels Hochdruckpumpe 1 auf einen Druck von ca. 320 bar gedrückt. Das im Wärmeaustauscher 2 teilweise vorgewärmte Hydriergas wird unter 320 bar dem Kohlebrei zugeleitet. Das Dreiphasengemisch, bestehend aus Feststoffen (Kohle, Katalysator), Öl und Hydriergas wird über Wärmeaustauscher 3 und einen Enderhitzer 4 auf Anspringtemperatur des Reaktors (z.B. 420–460 °C) erhitzt. Das dreiphasige Reaktionsgemisch durchströmt mehrere Hydrierreaktoren 5 und gelangt dann in den Heissabscheider 6, in welchem unten die Sumpfphase (scherer siedende Öle und Feststoffe) und oben die Gas/Dämpfephase (überschüssiges Hydriergas, Reaktionsgase und dampfförmige Kohleöle) abgezogen werden. Die Gas/Dämpfephase wird mittels Wärmeaustauscher 3 und 2 teilweise abgekühlt (z.B. 240 °C), wodurch ein Teil der Kohleöle auskondensiert. Im Abscheider 7 werden beide Phasen voneinander getrennt. Die Gas/Dämpfephase wird mittels Kühler 8 auf nahezu Umgebungstemperatur (z.B. 40 °C) abgekühlt, wodurch die restlichen Kohleöle auskondensieren. Die Trennung des Kohleöls (kalt) von den verbleibenden Gasen/Dämpfen (Hydriergas, Kohlenwasserstoffgase, Restgase) erfolgt im Abscheider 9. Mittels Gaswäsche 10 werden Kohlenwasserstoff (KW)-Gase aus dem verbleibenden Gas entfernt. Letzteres wird als sogenanntes Kreislaufgas mittels Verdichter 11 wieder auf 320 bar verdichtet und nach Zuführung von Frischwasserstoff als Hydriergas dem Beginn des Prozesses wieder zugeleitet. Die erfindungsgemässe prozesstechnische Einbindung der Druckabsicherung für den inneren Behälter (Blase) der Reaktoren und des Heissabscheiders erfolgt durch eine Pendelleitung 12 zwischen dem Kopf des Abscheiders 7 (Fig. 1) oder dem Kopf des Abscheiders 9 (Fig. 2) oder der Saugleitung des Verdichters 11 (Fig. 3) und den Ringräumen der Reaktoren sowie des Heissabscheiders. Die Pendelleitung ist eine Verbindungsleitung, die einen Druckausgleich zwischen den verbundenen Gefässen bewirkt. Bei der Pendelleitung 12, welche z.B. in Fig. 1 noch Öldämpfe enthält, wird einem Auskondensieren von Kohleöl und sich Ansammeln in Leitungssenken durch beheizte Leitungen oder einen Kühler 13 oberhalb des Abscheiders 7 entgegengewirkt.

Die prozesstechnische Begründung für die erfindungsgemässe Einbindung einer Pendelleitung an den Pfad zwischen dem Kopf des Heissabscheiders 6 und der Saugseite des Verdichters 11 liegt in der Tatsache, dass – beispielsweise bei der Kohlehydrierung – der Druckverlust zwischen den Reaktoren 5 und den Abscheidern 7, 9, 10 vergleichsweise gering (z.B. 3–5 bar) ist, so dass sich ohne zusätzliche Regelungseinrichtungen ein ausreichender, simultaner Druckausgleich zwischen Reaktorinnen- und Ringraum einstellt. Im Fall einer Pendelleitung zwischen Druckseite des Verdichters 11 und den Ringräumen der Reaktoren/Heissabscheider wäre das nicht der Fall, da die Aufheizung des Dreiphasen-Gemisches (bei der Kohlehydrierung stark erhöhte Viskosität infolge Kohlequellung) einen vergleichsweise grossen Druckverlust (z.B. 15–20 bar) zur Folge hat. Die genannten Werte für den Druckverlust gelten für den normalen Betriebsfall.

Bei Störfällen können in den Reaktoren rasche Druckabsenkungen (im Fall einer Notentspannung bei der Kohlehydrierung von z.B. 300 bar auf ca. 130 bar innerhalb 5 Min.) auftreten. Rasche Druckanstiege in vergleichbarer Grössenordnung treten nicht auf, da – beispielsweise beim Überhitzen des Reaktors – rechtzeitig die Notentspannung eingeleitet wird. Während nun beim normalen Betrieb (quasi stationär) mittels erfindungsgemässer Pendelleitung der Innenbehälter (Blase) des Reaktors unter geringem Überdruck gehalten wird, wird bei rascher Druckentlastung (z.B. Notentspannung) ein geringer Überdruck auf den Innenbehälter des Reaktors wirken. Da auf diese Weise keine einseitige starke Druckbelastung des Innenbehälters auftritt, kann der Innenbehälter der Reaktoren/Heissabscheider vergleichsweise dünn ausgelegt werden.

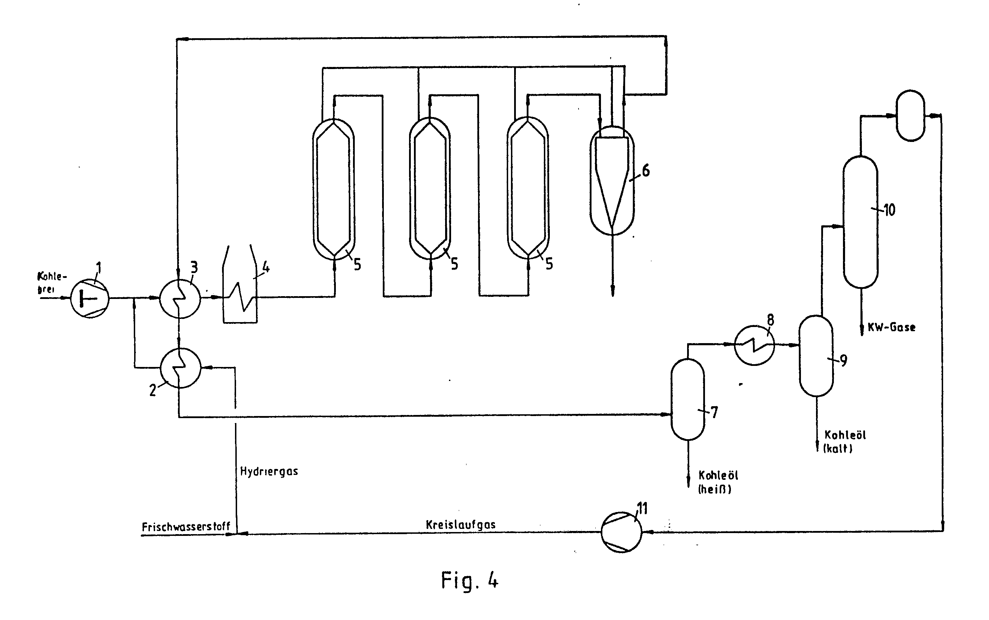

Prinzipiell kann die Pendelleitung auch direkt am kopfseitigen Ausgang des ersten Abscheiders 6 angeschlossen werden (Fig. 4). Hierdurch verringert sich die Druckdifferenz zwischen Innen- und Ringraum der Reaktionsbehälter noch weiter. Allerdings kann dann in der Pendelleitung eine Zweiphasenströmung (feststofffrei) auftreten, so dass auch Flüssigkeit in den Ringraum gelangt. In diesem Fall kann ggfs. auch prozesseigene Flüssigkeit als Stützmittel im Ringraum dienen.

## Patentansprüche

1. Verfahren zur prozesstechnischen Einbindung von thermisch- und druckbelasteten Sumpfphasereaktoren, wobei in der Sumpfphase eine Gasphase, flüssige Kohlenwasserstoffe und Feststoffe anfallen und wobei ein Heissabscheider nachgeschaltet ist, insbesondere von Kohlehydrierreaktoren mit innenliegender, den Reaktionsraum bildender Blase, mit äusserem Druckmantel und einem Druckmedium zwischen Blase und Druckmantel, wobei aus dem Reaktionsprodukt abgetrennte Gase nach Verdichtung zurückgeführt werden und wobei über eine Pendelleitung eine Verbindung der Reaktionsgase zum Ringraum des Reaktors gegeben ist, dadurch gekennzeichnet, dass die Pendelleitung (12) zum Ringraum des Reaktors (5) und des Heissabscheiders (6) nach Abtrennung von Feststoffen und schwerer siedenden Ölen zwischen der Kopfseite des Heissabscheiders und der Saugseite des Verdichters an den Gas/Dämpfe-Pfad angeschlossen ist.

2. Verfahren nach Anspruch 1, dadurch gekennzeichnet, dass die Pendelleitung (12) zum Ringraum des Reaktors (5) und des Heissabscheiders (6) nach einem zweiten Abscheider (7) an den Gas/Dämpfe-Pfad angeschlossen ist.

3. Verfahren nach Anspruch 1 und 2, dadurch gekennzeichnet, dass die Pendelleitung (12) hinter einem weiteren 3. Abscheider an den Gas/Dämpfe-Pfad angeschlossen ist.

4. Verfahren nach Anspruch 1, dadurch gekennzeichnet, dass die Pendelleitung (12) an dem kopfseitigen Austritt des Heissabscheiders (6) angeschlossen ist.

## Claims

1. Process for the tie-up of thermal and pressure slurry-phase reactors, wherein a gas phase, liquid hydrocarbons and solids are produced in the slurry phase and wherein a hot separator is connected behind, especially of coal hydrogenation reactors having an internal drum constituting the reaction chamber, with an outer pressure casing and a pressure medium between drum and pressure casing, wherein gases separated from the reaction product are recycled after compression and wherein a connection of the reaction gases to the annular space of the reactor is provided by a dangling pipeline, characterized in that the dangling pipeline (12) to the annular space of the reactor (5) and of the hot separator (6) is connected, after separation of solids and higher boiling oils, to the gas/vapours path between the top side of the hot separator and the suction side of the compressor.

2. Process according to Claim 1, characterized in that the dangling pipeline (12) to the annular space of the reactor (5) and of the hot separator (6) is connected to the gas/vapours path behind a second separator (7).

3. Process according to Claim 1 and 2, characterized in that the dangling pipeline (12) is connected to the gas/vapours path behind a further, third separator.

4. Process according to Claim 1, characterized in that the dangling pipeline (12) is connected to the top outlet of the hot separator (6).

## Revendications

1. Procédé pour le montage interne de réacteurs à phase de fond de cuve, sollicités thermiquement et par de la pression, dans lesquels une phase gazeuse, des hydrocarbures liquides et des substances solides s'accumulent dans la phase de fond de cuve et dans lesquels un séparateur à chaud est monté en aval, en particulier de réacteurs d'hydrogénation du charbon comportant une bulle interne, formant la chambre réactionnelle, une enveloppe externe sous pression et un milieu sous pression entre la bulle et l'enveloppe sous pression, les gaz séparés du produit réactionnel étant recyclés après compression et une communication des gaz réactionnels vers la chambre annulaire du réacteur étant fournie par l'intermédiaire d'un conduit de suspension, caractérisé en ce que le conduit de suspension (12) menant à la chambre annulaire du réacteur (5) et du séparateur à chaud (6) est, après séparation des substances solides et des huiles à ébullition difficile, raccordé à la voie des gaz/vapeurs entre le côté tête du séparateur à chaud et le côté aspiration du compresseur.

2. Procédé suivant la revendication 1, caractérisé en ce que le conduit de suspension (12) menant à la chambre annulaire du réacteur (5) et du séparateur à chaud (6) est raccordé à la voie des gaz/vapeurs après un deuxième séparateur (7).

3. Procédé suivant l'une des revendications 1 et 2, caractérisé en ce que le conduit de suspension (12) est raccordé à la voie des gaz/vapeurs en aval d'un autre troisième séparateur.

4. Procédé suivant la revendication 1, caractérisé en ce que le conduit de suspension (12) est raccordé à la sortie du côté tête du séparateur à chaud (6).

Fig. 1

Fig. 2

KW-Gase

Kohleöl (kalt)

Kohleöl (heiß)

Kohle-brei

Frischwasserstoff

Hydriergas

Kreislaufgas

Fig. 3

Fig. 4

Kohle-brei · Kohleöl (heiß) · Kohleöl (kalt) · KW-Gase · Hydriergas · Frischwasserstoff · Kreislaufgas

0 134 894